# EUROPEAN PATENT SPECIFICATION

(11) **EP 1 977 823 B1**
(45) Date of publication and mention of the grant of the patent: **27.06.2012**
(21) Application number: 08006019.7
(22) Date of filing: 28.03.2008
(51) Int. Cl.: B01J 21/06, B01J 23/00, B01J 23/02, B01J 35/00, B01J 35/04, B01J 37/00, B01J 37/02, C01B 3/26, H01M 8/06

(54) **Reforming catalyst support and method of producing the same**
Reformierungskatalysatorträger und Verfahren zu seiner Herstellung
Support de catalyseur de reformage et son procédé de fabrication

(30) Priority: 30.03.2007 JP 2007092798
(43) Date of publication of application: 08.10.2008
(73) Proprietor: Kabushiki Kaisha Toyota Chuo Kenkyusho, Aichi-Gun Aichi 480-1192 (JP)
(72) Inventor: Mitsui, Hiroyuki, Nagakute-cho, Aichi-gun Aichi 480-1192 (JP); Sobukawa, Hideo, Nagakute-cho, Aichi-gun Aichi 480-1192 (JP); Shimazu, Takashi, Nagakute-cho, Aichi-gun Aichi 480-1192 (JP); Takada, Yasuo, Nagakute-cho, Aichi-gun Aichi 480-1192 (JP)
(74) Representative: Kramer - Barske - Schmidtchen

(56) References cited:
- EP-A- 1 036 767
- EP-A- 1 175 935
- EP-A- 1 630 131
- JP-A- 2002 282 688
- US-A1- 2001 022 960

## Description

### BACKGROUND OF THE INVENTION

### Field of the Invention

The present invention relates to a reforming catalyst support useful in a fuel reforming system or the like which utilizes a sulfur-containing hydrocarbon fuel as a source material, and also relates to a method to produce the same.

### Related Background Art

Various reforming catalysts, such as catalysts for hydrogen production reaction, have been developed to generate hydrogen as a fuel in fuel reforming systems such as fuel cells. Catalysts generally used as such reforming catalysts are formed by having a metal oxide such as alumina and a noble metal such as platinum, rhodium and palladium supported by any of various kinds of substrates such as a honeycomb filter.

In fuel reforming systems which utilize sulfur-containing hydrocarbon fuels or the like as source materials, the hydrogen production capacity decreases due to an influence of the sulfur component on the catalyst support. This phenomenon is so-called sulfur poisoning which has been a problem. To cope with the sulfur poisoning, Japanese Unexamined Patent Application Publication No. 2002-121006 (JP 2002-121006 A), for example, discloses a reforming catalyst exhibiting tolerance to sulfur poisoning. In this reforming catalyst, at least platinum is supported on a support that contains a compound oxide of Zr and at least one element selected from the group consisting of La, Ce, Al, Ga, Ti, Mg, Ca, Sr and Ba.

However, in terms of conventional reforming catalysts like that described in JP 2002-121006 A, the catalyst supports practically exhibit only insufficient stability in tolerance to sulfur poisoning at the reforming temperatures (the reforming temperature for hydrocarbon fuels is approximately 700°C or above). Accordingly, there is a limitation in improving reforming-performance stability over time.

EP 1 175 935 A2 discloses a composite oxide, a process for producing the same, a catalyst for purifying exhaust gas and a process for producing the same. In particular, it discloses a composite oxide, comprising agglomerated particles having an average particle diameter of 20 µm or less and being composed of a plurality of metallic element oxides which are in form of fine particles having an average diameter of 50 nm or less, said agglomerated particles having a surface and an inner portion whose metallic element distributions differ with each other, and a process for producing a composite oxide, comprising the steps of preparing a plurality of aqueous solutions of metallic acid salts, adding the plurality of aqueous solutions successively to an alkaline aqueous solution, which can neutralize the total amount of the metallic acid salts, thereby generating precipitates, and calcining the precipitates.

JP 2002-282688 A relates to a catalyst carrier and a method for producing it, wherein the catalyst carrier has pores in a meso-pore region and contains tetragonal zirconia and in which at least parts of ZrO₂ and TiO₂ are converted into a ZrO₂-TiO₂ solid solution by burning a precipitate coprecipitated from a solution of acid salts of Al, Zr and Ti at 550°C or above.

EP 1 630 131 A1 discloses a reformer system for producing hydrogen, wherein the reforming catalyst comprises one or more porous substrate(s), one or more catalytic metal(s) and one or more support material(s), wherein the support materials can be selected from gamma aluminum oxide, delta aluminum oxide, theta aluminum oxide, stabilized aluminum oxides, titanium oxides, zirconium oxides, yttrium oxides, lanthanum oxides, cerium oxides, scandium oxide as well as combinations thereof, wherein in particular a lanthanum stabilized aluminum oxide or a titania-zirconia solid solution are mentioned.

EP 1 036 767 A1 discloses a titania-zirconia powder, wherein at least a part of the zirconia is dissolved in the crystalline phase of titania to form a solid solution, or at least a part of the titania is dissolved in the crystalline phase of zirconia to form a solid solution, wherein the titania-zirconia powder may be dispersed in an alumina powder.

US 2001/0022960 A1 discloses a catalyst for hydrolysing a complex metal hydride to generate hydrogen, wherein in the catalyst platinum is carried on a ceria-zirconia solid solution or a titania-zirconia solid solution.

### SUMMARY OF THE INVENTION

The present invention was made in the light of problems associated with the above described conventional technology. Objects of the present invention are to provide a reforming catalyst support having sufficiently high stability in tolerance (hereinafter, may be simply referred to as "tolerance") to sulfur poisoning at a reforming temperature and achieving a sufficient improvement in reforming-performance stability over time, to provide a method of producing such catalyst support, to provide a catalyst including the catalyst support and a method of preparing the same.

The above-described object are achieved by the catalyst support according to claim 1, the catalyst according to claim 8, the method according to claim 9, the method according to claim 18 and the use according to claim 19.

According to the present invention, it is possible to provide a reforming catalyst support having sufficiently high tolerance to sulfur poisoning at reforming temperatures and being capable of sufficiently improving reforming-performance stability over time, and also to provide a method which allows the production of the reforming catalyst support.

### BRIEF DESCRIPTION OF THE DRAWINGS

Fig. 1 is a schematic diagram of a test device used in a tolerance-stability test for sulfur poisoning.
Fig. 2 is a graph for explaining definitions of a regeneration efficiency and a flow maintaining rate.
Fig. 3 is a graph showing results of the regeneration efficiency and the flow maintaining rate obtained by using a reforming catalyst support in Example 1.
Fig. 4 is a graph showing results of the regeneration efficiency and the flow maintaining rate obtained by using a reforming catalyst support in Comparative Example 1.
Fig. 5 is a graph showing a measurement result of a non-methane hydrocarbon concentration in an outlet reaction gas obtained by using the reforming catalyst support in Example 1.
Fig. 6 is a graph showing a measurement result of a non-methane hydrocarbon concentration in an outlet reaction gas obtained by using the reforming catalyst support in Comparative Example 1.
Fig. 7 is a graph showing a pore diameter distribution in a matrix in a coating obtained in Example 1.

### DETAILED DESCRIPTION OF THE PREFERRED EMBODIMENTS

The present invention will be described below in detail according to the preferred embodiments.

Firstly, reforming catalyst supports of the present invention will be described. A reforming catalyst support of the present invention comprises;
a substrate; and
a coating formed on a surface of the substrate and comprising a matrix and powders of a zirconia-titania solid solution, said powders being dispersed in the matrix, wherein the content of zirconia in the zirconia-titania solid solution is 50 mass% to 90 mass% of the total amount of zirconia and titania, said matrix being a nanoporous metal oxide with nanopores, the nanopores having diameters of 10 nm or less, and said nanoporous metal oxide being at least one member selected from the group consisting of alumina, zirconia, iron oxides, oxides of rare earth elements, alkali metal oxides and alkali earth metal oxides.

The metal oxide constituting the matrix in the coating of the reforming catalyst supports of the present invention is at least one member of metal oxides selected from the group consisting of alumina, zirconia, iron oxides, oxides of rare earth elements, alkali metal oxides and alkali earth metal oxides. Examples of oxides of rare earth elements include oxides of cerium, lanthanum, neodymium, yttrium and praseodymium. Examples of alkali metal oxides include oxides of lithium, sodium, potassium and cesium. Examples of alkali earth metal oxides include oxides of barium, strontium, calcium and magnesium.

From the viewpoint that catalyst supports to be obtained would be useful as reforming catalyst supports for hydrogen production reaction and the like, at least one member of metal oxides selected from the group consisting of alumina, zirconia, iron oxides, ceria, lanthana, neodymia, yttria, barium oxide, lithium oxide and potassium oxide is preferable as such metal oxides according to the present invention. Particularly, metal oxides containing at least one member selected from the group consisting of alumina, zirconia, and ceria are more preferable.

Moreover, the metal oxide according to the present invention can be either one member of metal oxide or a compound metal oxide consisted of two or more members of metal oxides. Combinations of two or more members of metal oxides constituting such a compound metal oxide are not particularly limited. However, from the viewpoint that the obtained catalyst supports would be useful as reforming catalyst supports for hydrogen production reaction and the like, combinations of alumina/ceria, alumina/ceria/zirconia, alumina/zirconia/lanthana, zirconia/lanthana, zirconia/neodymia, zirconia/yttria, ceria/zirconia, alumina/zirconia/yttria, ceria/zirconia/yttria, alumina/zirconia, alumina/lanthana, alumina/ceria/zirconia/yttria, alumina/ceria/zirconia/neodymia, alumina/ceria/zirconia/lanthana, alumina/ceria/zirconia/lanthana/praseodymium oxide, alumina/ceria/zirconia/lanthana/neodymia, alumina/ceria/zirconia/lanthana/neodymia/yttria, alumina/iron oxides, ceria/iron oxides, alumina/ceria/iron oxides, zirconia/iron oxides, alumina/zirconia/iron oxides, and the like are preferable. Particularly, combinations of alumina/ceria, alumina/ceria/zirconia, alumina/zirconia/lanthana, zirconia/lanthana, zirconia/neodymia, zirconia/yttria, ceria/zirconia, alumina/zirconia/yttria, ceria/zirconia/yttria, alumina/zirconia, and alumina/iron oxides are more preferable.

It should be noted that composition ratio of metal oxides in such various compound metal oxides is not particularly limited and is adjusted in accordance with their usage where appropriate.

In the reforming catalyst supports of the present invention, the coating formed on the substrate surface includes the metal oxide as the matrix, and the matrix is a nanoporous metal oxide material with nanopores, wherein the nanopores have diameters of 10 nm or less.

Such nanoporous metal oxide material suitable for the present invention comprises at least one member of the aforementioned metal oxides with nanopores, wherein the nanopores have diameters of 10 nm or less, preferably 5 nm or less, and more preferably 2 nm or less. With such a nanoporous metal oxide material, improvements in adhesion to various substrates are possible compared to metal oxides without such microscopic pores. For this reason, powder of a zirconia-titania solid solution (powder of a zirconia-titania solid solution and powder of a zirconia-calcia solid solution in a case where the zirconia-calcia solid solution powder is further contained) to be described later is supported, with a condition of being dispersed and sealed in the pores, on the substrate with high adhesion. Thus, tolerance of the catalyst support to sulfur poisoning tends to improve more reliably.

The zirconia-titania solid solution powder is contained in the matrix formed of the metal oxide in the reforming catalyst support of the present invention. The zirconia-titania solid solution powder comprises zirconia and titania, at least parts of which form the solid solution in the powder.

In the zirconia-titania solid solution according to the present invention, the composition ratio of zirconia to titania is a specific ratio such that the content of zirconia is 50 mass% to 90 mass% of the total amount of zirconia and titania. When the content of zirconia is lower than the lower limit, inactivation due to the aggregation of titania cannot be sufficiently prevented, and accordingly the tolerance of the catalyst support to sulfur poisoning at the reforming temperature tends to deteriorate. On the other hand, the sulfur-poisoning suppression effect of titania tends to be insufficient when the content of zirconia exceeds the upper limit.

Moreover, the average particle size of the zirconia-titania solid solution powder according to the present invention is preferably in the range of 0.01 µm to 50 µm and more preferably in the range of 0.1 µm to 10 µm. Powder with its average particle size smaller than the lower limit is difficult to produce with a method in which the zirconia-titania solid solution powder obtained by calcination after the coprecipitation is ground. On the other hand, when the average particle size of the powder exceeds the upper limit, coating thickness becomes very thick and adhesion tends to deteriorate easily.

Furthermore, in the present invention, the amount of the zirconia-titania solid solution powder to be supported on the substrate surface is not particularly limited. However, the proportion of the zirconia-titania solid solution powder in the coating to be obtained is preferably 10 mass% to 60 mass% relative to the total amount of metal oxides constituting the coating, and more preferably 15 mass% to 55 mass%. When the proportion of the powder is lower than the lower limit, improvements in the tolerance of the catalyst support to sulfur poisoning at the reforming temperature are not likely to be achieved sufficiently. On the other hand, adhesion to various substrates tends to deteriorate when the proportion exceeds the upper limit.

Incidentally, a method of obtaining the zirconia-titania solid solution powder according to the present invention is not particularly limited. For example, it is possible to produce zirconia-titania solid solution powder by adopting the following coprecipitation method or the like where appropriate. Specifically, in the method, a coprecipitate is formed from a raw-material solution containing a titanium salt (such as titanium tetrachloride), a zirconium salt (such as zirconium oxynitrate), and, if necessary, an additive component such as a surfactant (such as a nonionic surfactant) and hydrogen peroxide, under a presence of ammonia. The obtained coprecipitate is filtered, washed, calcinated, and further ground as necessary to obtain powder of a zirconia-titania solid solution.

Furthermore, it is also possible to support a noble metal on the surface of such zirconia-titania solid solution powder in advance. Examples of such a noble metal include platinum, rhodium, palladium, osmium, iridium, and gold. However, from the viewpoint that the catalyst supports to be obtained would be useful as reforming catalyst supports for hydrogen production reaction and the like, platinum, rhodium and palladium are preferable. The amount of such a noble metal to be supported is not particularly limited and is adjusted depending on the usage of the obtained catalytic support and the like where appropriate. However, the amount of approximately 0.1 to 10 mass parts relative to 100 mass parts of the metal oxides constituting the obtained coating is generally adopted. Specific methods to support such a noble metal are not particularly limited either. For example, a method of immersing the aforementioned powder into solution obtained by dissolving a salt (such as nitrate, chloride and acetate) of a noble metal or a complex of a noble metal in a solvent such as water or alcohol, followed by the removal of solvent, and calcinating and grinding of the resultant is preferably applied. It should be noted that, when the solvent is removed in the step of supporting the noble metal, drying conditions of 30°C to 150°C for about 10 minutes or less and calcination conditions of 250°C to 300°C for about 30 minutes to 60 minutes in an oxidizing atmosphere (for example, air) are preferable. Moreover, it is also possible to repeat such noble metal-supporting step until the desired supporting amount is obtained.

In the present invention, the coating in which the zirconia-titania solid solution powder is dispersed in the aforementioned specific metal oxide matrix, is formed on the substrate surface. Thereby, the tolerance of the catalyst support to sulfur poisoning at the reforming temperatures is greatly improved. Although the reason is not clearly understood, the inventors estimate the reason as follows. Firstly, in the present invention, titania is dispersed in the coating of the catalyst support, and thus, adsorption frequency of sulfur is reduced at the time of reforming, and the adsorbed sulfur is easily detached at the regeneration process. In conventional catalyst supports, titania having the sulfur-poisoning suppression effect is inactivated by the aggregation caused by the interaction in the dispersion composition at the reforming temperature. On the other hand, in the present invention, titania is stabilized by being in a solid solution state with zirconia. As a result, the inactivation due to the aggregation of titania is sufficiently prevented. For this reason, the inventors estimate that the sulfur-poisoning suppression effect of titania is stably maintained even at the reforming temperatures according to the present invention, and the tolerance of the catalyst support to sulfur poisoning at the reforming temperature is considerably improved.

Additionally, it is preferable that, in addition to the zirconia-titania solid solution powder, a zirconia-calcia solid solution powder be further contained in the aforementioned specific metal oxide matrix in the reforming catalyst support of the present invention. The zirconia-calcia solid solution powder comprises zirconia and calcia, at least parts of which form the solid solution in the powder.

In the zirconia-calcia solid solution according to the present invention, the composition ratio of zirconia and calcia is not particularly limited. However, the content of zirconia is preferably 80 mass% to 98 mass% of the total amount of zirconia and calcia. When the content of zirconia is lower than the lower limit, the improvement effect of zirconia on tolerance to sulfur poisoning tends to be insufficient. On the other hand, inactivation due to the aggregation of zirconia cannot be prevented sufficiently, and accordingly the tolerance of the catalyst support to sulfur poisoning at the reforming temperature tends to deteriorate when the content of zirconia exceeds the upper limit.

Moreover, the average particle size of the zirconia-calcia solid solution powder of the present invention is preferably in the range of 0.01 µm to 50 µm and more preferably in the range of 0.1 µm to 10 µm. Powder with its average particle size smaller than the lower limit is difficult to produce with a method in which the zirconia-calcia solid solution powder obtained by calcination after the coprecipitation is ground. On the other hand, when the average particle size of the powder exceeds the upper limit, coating thickness becomes very thick and adhesion tends to deteriorate easily.

Furthermore, in the present invention, the amount of the zirconia-calcia solid solution powder to be supported on the substrate surface is not particularly limited. However, the proportion of the zirconia-calcia solid solution powder in the coating to be obtained is preferably 10 mass% to 60 mass% relative to the total amount of metal oxides constituting the coating, and more preferably 15 mass% to 50 mass%. When the proportion of the powder is lower than the lower limit, improvements in tolerance of the catalyst support to sulfur poisoning at the reforming temperature are not likely to be achieved sufficiently. On the other hand, adhesion to various substrates tends to deteriorate when the proportion exceeds the upper limit.

Incidentally, a method of obtaining the zirconia-calcia solid solution powder of the present invention is not particularly limited. For example, it is possible to produce the zirconia-calcia solid solution powder by adopting the following coprecipitation method or the like where appropriate. Specifically, in the method, a coprecipitate is formed from a raw-material solution containing a calcium salt (such as calcium nitrate), a zirconium salt (such as zirconium oxynitrate), and an additive component such as a surfactant (such as a nonionic surfactant) as necessary, under a presence of ammonia. The obtained coprecipitate is filtered, washed, calcinated, and further ground if necessary to obtain powder of a zirconia-calcia solid solution.

In addition to the zirconia-titania solid solution powder, the zirconia-calcia solid solution powder is preferably further contained in the aforementioned specific metal oxide matrix in the present invention. Thereby, the tolerance of the catalyst support to sulfur poisoning is further improved. Although the reason is not clearly understood, the inventors estimate the reason as follows. Specifically, zirconia effective in improving the tolerance to sulfur poisoning tends to inactivated by the aggregation caused by the interaction in the dispersion composition at the reforming temperature as described above. In the meanwhile, zirconia is stabilized by being in a solid solution state with calcia. As a result, the inactivation due to the aggregation of zirconia is sufficiently prevented. For this reason, the inventors estimate that, by further causing the zirconia-calcia solid solution powder to be preferably contained in addition to the zirconia-titania solid solution powder, the improvement effect of zirconia on tolerance to sulfur poisoning is stably maintained even at the reforming temperature, and the tolerance of the catalyst support to sulfur poisoning are further improved.

The substrate used in the present invention is not particularly limited. Monolith support substrates (e.g. honeycomb filters, high density honeycombs), foam filter substrates, pellet substrates, plate substrates and the like are suitably adopted. Moreover, properties of materials used for such substrates are not particularly limited either. Substrates made of ceramics such as cordierite, silicon carbide and mullite, as well as substrates made of metals such as stainless steel containing chromium and aluminum are suitably adopted. It should be noted that, when metal substrates are used, heat treatment at 300°C to 1000°C for approximately 1 hour to 10 hours is preferably carried out to form an oxide coating on the metal-substrate surface in advance. In this way, the adhesion tends to be further improved.

Additionally, the thickness of aforementioned coating formed on the surface of the substrate in the present invention is not particularly limited and is adjusted according to the substrate to be used, the usage of obtained catalyst and the like where appropriate. However, the coating thickness is preferably approximately 1 µm to 300 µm and more preferably 1 µm to 50 µm, since it is possible to form a coating with excellent adhesion to various substrates such as metallic honeycomb filters even when the coating is formed to be thin with a production method of the present invention which will be described later. Furthermore, it is possible to form a coating with reduced thickness on the surface of the substrate according to the present invention. Therefore, it is possible to form a coating with high level of adhesion even to high density honeycombs on which forming sufficient coating has been conventionally difficult. Thus, coating thickness of approximately 1 µm to 30 µm is especially preferable from such a point of view.

The reforming catalyst supports of the present invention have been described so far. Additionally, it is also possible to further support a noble metal on the surface of the reforming catalyst supports of the present invention. Example of such a noble metal can be platinum, rhodium, palladium, osmium, iridium, gold, and the like, and is not particularly limited. Particularly, platinum, rhodium and palladium are more preferable. Moreover the amount of supported noble metal is not particularly limited and is adjusted depending on the usage of obtained catalyst and the like where appropriate. However, the amount of approximately 0.1 to 10 mass parts relative to 100 mass parts of the metal oxide constituting the coating to be obtained is generally adopted.

Next, a method of producing the reforming catalyst supports' of the present invention will be described. In the method of producing the reforming catalyst supports of the present invention, the aforementioned coating is obtained by the following procedures; firstly the above described zirconia-titania solid solution powder is mixed together with a fluid raw material composition containing a raw material of a metal oxide described below at a shear rate of 10000 sec⁻¹ or higher to obtain a coating composition, and then the resulting coating composition was applied onto the substrate followed by heat treatment.

At least one member selected from the group consisting of colloidal particles of alumina, zirconia, iron oxides, oxides of rare earth elements, alkali metal oxides and alkali earth metal oxides, and salts of aluminum, zirconium, iron, rare earth elements, alkali metals and alkali earth metals is suitable as the raw material for the metal oxide used in the present invention.

Moreover, (i) a colloidal solution containing at least one member selected from the group consisting of colloidal particles of alumina, zirconia, iron oxides, oxides of rare earth elements, alkali metal oxides and alkali earth metal oxides, or (ii) a metal salt solution containing at least one member selected from the group consisting of salts of aluminum, zirconium, iron, rare earth elements, alkali metals and alkali earth metals, is preferably used as the fluid raw material composition according to the present invention.

Firstly, the colloidal solution according to the present invention will be described. The colloidal particle according to the present invention is that of the metal oxide with average particle size of 5 nm to 200 nm, preferably 5 nm to 100 nm. As for the colloidal particles with average particle size smaller than 5 nm, it is difficult to prepare particles with a size not greater than that of a single metal oxide in principle. On the other hand, when the average particle size exceeds 200 nm, various problems such as degradations of mixing, dispersibility, adhesion, and reactivity will arise.

Note that, shapes of such colloidal particles are not particularly limited here, and the examples include acicular particles, rod particles, feathery particles, spherical particles, and particles of indeterminate forms. Additionally, a solvent for adjusting concentration of the colloidal solution is not particularly limited either, and water, alcohol, and the like may be used. The solvent to be used is determined by considering the amount of supported metal oxide at one procedure, and the like.

Moreover, in the present invention, when a matrix formed of two or more members of metal oxides is obtained, part of these metal oxides can be further contained in the colloidal solution as a solution of an element constituting the metal oxide. As such a solution, suitably used is a solution dissolving a salt (such as nitrate, acetate, chloride, sulfate, sulfite and inorganic complex salt) of a metal which constitutes the element of the metal oxide, in a solvent such as water and alcohol.

Next, the metal salt solution according to the present invention will be described. The metal salt used as the raw material in the present invention is a component to be oxidized by a calcination process described later thereby to become the aforementioned metal oxide; i.e. salt of at least one metal selected from the group consisting of aluminum, zirconium, iron, rare earth elements, alkali metals and alkali earth metals.

Moreover, as the metal salts according to the present invention, suitably used are water-soluble salts such as nitrates, acetates, chlorides, sulfates, sulfites, and inorganic complex salts of the above-described metals (e.g. aluminum nitrate, zirconium oxynitrate, cerium nitrate, zirconium acetate, zirconium oxysulfate, and yttrium nitrate).

Furthermore, a solvent for preparing a solution containing the mental salt according to the present invention is not particularly limited, and various solvents such as water and alcohol (e.g. a single solvent of methanol, ethanol, ethylene glycol, or the like, or combination of them) are used. In the viewpoint of improving the adhesion to metal substrates, mixed solvents of water and alcohol are preferable, and those containing alcohol of 40 mass% to 100 mass% are preferable (those containing alcohol of 55 mass% to 80 mass% by are more preferable). Moreover, although pH of the metal salt solution according to the present invention is not particularly limited, the metal salt solution with pH of 3.0 to 6.0 is preferable from the viewpoints that metal ions exist more stably in the solution.

In the method of producing the reforming catalyst supports of the present invention, a fluid raw material composition containing a raw material of the metal oxide is mixed together with the zirconia-titania solid solution powder (the zirconia-titania solid solution powder and the zirconia-calcia solid solution powder in the case where the zirconia-calcia solid solution powder is further contained) at a shear rate of 10000 sec⁻¹ or higher to obtain a coating composition. The resulting coating composition is applied onto the substrate, and then heat-treated to be the coating.

In other words, in the present invention, the coating composition is obtained by firstly mixing the solid solution powder together with the fluid raw material composition at a shear rate of 10,000 sec⁻¹ or higher, and preferably 20,000 sec⁻¹ or higher. When the shear rate is lower than 10000 sec⁻¹, sufficient improvements in adhesion of the coating to the substrate are not achieved. Note that, the shear rate is preferably 200,000 sec⁻¹ or less although the upper limit for the shear rate is not particularly limited.

Although equipment used here is not particularly limited as long as it is usable for mixing at high shear rates, a homogenizer is suitably used. Moreover, mixing time at such high shear rates is not particularly limited either, although approximately 1 minute to 20 minutes (preferably 1 minute to 5 minutes) of mixing time is common.

The concentrations (solid concentration) of solutions (dispersions) containing the solid solution powder and the fluid raw material composition mixed at such high shear rates, are adjusted depending on the thickness of the coating to be obtained and viscosity suited for a application method and the like where appropriate. Generally, the solid concentration is approximately 5 mass% to 50 mass%, and is preferably approximately 10 mass% to 15 mass%.

Additionally, further degassing treatment can be carried out in the present invention by gently stirring (e.g. 20 rpm to 100 rpm) the mixed fluid raw material composition for about 1 minute to 2 minutes in order to sufficiently remove air bubbles mixed in the obtained coating composition.

In the coating composition according to the present invention described above, various components of the raw material of the metal oxide (colloidal particles and/or metal salts) are dispersed extremely uniformly. By heat-treating the substrate after the application of such a coating composition without practical precipitation, it is possible to form the metal oxide coating with high adhesion to various substrates like honeycomb filters. Therefore, in the present invention, the metal oxide will become the matrix for the solid solution powder, and the solid solution powder will be supported on the surface of the substrate, while being dispersed and sealed in the matrix. Thus, interparticle force and adhesion to the substrate are independent of the solid solution powder, and the powder is fixed onto the surface of the substrate by the metal oxide functioning as matrix. Hence, it is possible to uniformly form the metal oxide coating of thin film containing the solid solution oxide powder with high level of adhesion to substrates such as metallic honeycomb filters and high density honeycombs, according to the producing method of the present invention.

As described above, it is preferable to heat-treat the substrates after the application of the coating composition without practical precipitation in the present invention. The phrase "without practical precipitation" describes the state where metal elements in the fluid raw material composition become metal oxides by being solidified due to the heat treatment practically without going through hydroxylation. More specifically, the phrase describes the case where ratio of metal hydroxides in metal components in the fluid raw material composition before the heat treatment is 50 at% or less (more preferably 30 at% or less).

Moreover, intended catalyst supports are obtained by mixing the coating composition at the aforementioned high shear rates, then applying the coating composition onto the substrates, and heat-treating the resultant without practical precipitation in the method of producing the reforming catalyst supports of the present invention. Moreover, when the metal salt solution is used as the fluid raw material composition, the reforming catalyst supports of the present invention described above can be obtained by generating the metal oxides by oxidizing metal component in the fluid raw material composition using such heat treatment.

In the present invention, the coating composition is preferably heat-treated rapidly after the above-described mixing and application. Specific methods for such heat treatment are not particularly limited. However, a method in which the coating composition is rapidly dried after its mixing and application, and further calcinated where necessary is suitably adopted.

In the present invention, time taking from the mixing of the coating composition at the high shear rate to the heat treatment of the coating composition is desirably as short as possible, preferably within about 60 minutes, and more preferably within about 30 minutes. When the time exceeds the upper limit, the metal oxides aggregate before and during the heat treatment process due to the reduction in the effect of stirring at high shear rates. Accordingly, it becomes difficult to obtain a coating with sufficiently improved adhesion and heat tolerance.

Moreover, although a calcination process described later may also serve as a drying process, it is preferable to dry the coating composition rapidly before the calcination by removing solvents. In that case, drying temperature at about 60°C to 180°C (more preferably, the temperature at 100°C to 150°C) and the drying time of within 10 minutes (more preferably, within 5 minutes) is more preferable as the drying condition. When the drying temperature is lower than the lower limit, rapid drying is unlikely to be achieved sufficiently. On the other hand, when the drying temperature exceeds the upper limit, the initial drying rate becomes too fast and evaporation rate of water far exceeds the film formation rate. This causes cracks and fractures, and results in the considerable reduction in adhesion. Moreover, when the drying time exceeds the upper limit, the metal oxides aggregate during the drying process due to the reduction in the effect of stirring at high shear rates. Thus, a coating with sufficiently improved adhesion and heat tolerance is unlikely to be obtained. Note that, the coating composition should preferably be dried until the proportion of water content becomes 200 mass% or less (especially preferably 100 mass% or less) in such a rapid drying process.

Furthermore, the calcinating temperature at 250°C to 600°C (especially preferably 350°C to 500°C) and the calcinating time of 20 minutes to 70 minutes (especially preferably 30 minutes to 60 minutes) in an oxidizing atmosphere (for example, air) is more preferable as the calcination condition. When the calcinating temperature is lower than the lower limit, sufficient calcination is not achieved, and thus the coating with sufficiently improved adhesion and heat tolerance is unlikely to be obtained. On the other hand, when the calcinating temperature exceeds the upper limit, reduction in sintering performance and the like tends to occur due to the high temperature oxidizing atmosphere. Moreover, when the calcinating time is lower than the lower limit, sufficient calcination is not achieved, and the coating with sufficiently improved adhesion and heat tolerance is unlikely to be obtained. On the other hand, when the calcinating time exceeds the upper limit, the metal oxides aggregate during the calcinating process due to the reduction in the effect of stirring at high shear rates. Thus, a coating with sufficiently improved adhesion and heat tolerance is unlikely to be obtained.

The amount of coating composition applied onto the substrates in the present invention is not particularly limited, and is adjusted depending on the type of substrates used, the usage of obtained catalysts and the like where appropriate. The preferable amount of metal oxides constituting the coating is 10 g to 300 g relative to 1 liter of substrate volume.

Specific methods to apply the coating composition onto the substrates are not particularly limited in the present invention. For example, a method of immersing the substrates in the coating composition, a method of applying the coating composition onto the substrate surface with sprays, and the like, are preferably adopted.

In addition, it is possible to repeat the step of applying the coating composition onto the substrates until the preferable amount is supported. In this case, the substrates are preferably precalcinated after the application and drying of the coating composition. The precalcinating temperature at 250°C to 300°C and the precalcinating time of 30 minutes to 60 minutes in an oxidizing atmosphere (e.g. air) is especially preferable as the precalcination condition.

Next, a method to obtain catalysts for hydrogen production reaction and the like using the reforming catalyst supports obtained by the producing method of the present invention will be described. Specifically, the producing method of the present invention may further include a step to support the above-described noble metal on the coating surface.

Specific methods to support such a noble metal are not particularly limited. For example, the following method is preferably adopted. Firstly, the catalyst support is immersed in a solution obtained by dissolving a noble metal salt (e.g. nitrate, chloride, acetate) or a noble metal complex in a solvent such as water and alcohol, the solvent is removed, and then the resultant is calcinated. Note here that drying conditions of 30°C to 150°C within approximately 10 minutes or less and calcination condition of 250°C to 300°C for approximately 30 minutes to 60 minutes in an oxidizing atmosphere (e.g. air) are preferable when the solvent is removed in the step of supporting the noble metal. Additionally, it is possible to repeat such a step to support the noble metal until the desired amount is supported.

In the production method of the present invention described so far, the coating is formed on the substrate surface by dispersing the zirconia-titania solid solution powder (the zirconia-titania solid solution powder and the zirconia-calcia solid solution powder in the case where the zirconia-calcia solid solution powder is further contained) in the specific metal oxide matrix. The coating thus formed has high adhesion to the substrate surface and high uniformity. Thereby, the tolerance of the catalyst support to sulfur poisoning at the reforming temperature is further improved. Although the reason is not clearly understood, the inventors estimate the reasons as follows. A conventional metal oxide coating simply obtained by using a metal oxide colloid solution and a metal salt solution or obtained from these solutions together with a binder component, does not have a sufficient level of adhesion and uniformity. In contrast, according to the production method of the present invention, the fluid raw material composition containing the raw material of a metal oxide is mixed at the high shear rate, and then preferably rapidly dried. Thereafter, the resultant is used to obtain the metal oxide. The metal oxide thus obtained is a nanoporous metal oxide material with nanopores, wherein the nanopores have diameters of 10 nm or less, and, surprisingly, the adhesion to the substrate is significantly improved. The nanoporous metal oxide material serving as the matrix is supported on the substrate, while the above solid solution powder is dispersed and sealed in the pores. For this reason, the inventors estimate that, in the catalyst supports of the present invention obtained according to the production method of the present invention, the high adhesion and uniformity are simultaneously achieved, and the tolerance of the catalyst support to sulfur poisoning at the reforming temperature is further improved.

### [Examples]

The present invention will be more specifically described below based on Example and Comparative Example, although the present invention is not limited to the Example described below.

Here, TK Robo Mics manufactured by PRIMIX Corporation. (TK Homo Mixer MARKII 2.5 for the stirring parts) was used as a homogenizer.

Moreover, materials described below were respectively used as an alumina (Al₂O₃) colloid, a Zr solution, a Ti solution, a Ca solution, a Ce solution, and an Rh solution.
Al₂O₃ colloid...average particle size: 5 nm to 20 nm, acicular particle, nitrate water solution (alumina concentration: 25 mass%),
Zr solution...zirconium oxynitrate water solution (zirconia concentration: 18 mass%)
Ti solution...titanium tetrachloride water solution (titania concentration: 27.5 mass%)
Ca solution...calcium nitrate water solution (calcia concentration: 10 mass%)
Ce solution...cerium nitrate water solution (ceria concentration: 28 mass%)
Rh solution...rhodium nitrate water solution (rhodium concentration: 3 mass%)

Furthermore, a high density metallic honeycomb (Fe-20Cr-5Al, 18 mm Φ × 22 mm) of 1200 cell/inch² was used as a substrate for evaluation of reforming performances.

### (Example 1)

### <Preparation of Zirconia-Titania Solid Solution Powder>

A Ti solution and a Zr solution were weighed to obtain the mass ratio between zirconia and titania of 70/30 (zirconia/titania), and dissolved in 1000 g of water. Then, the obtained solution was added with 160 g of 30 mass% solution of hydrogen peroxide and with 24 g of a surfactant (LEOCON 1020H available from Lion corporation) to obtain a raw-material solution. Subsequently, while being stirred, ammonia water obtained by diluting 456 g of 25% ammonia water with 1000 g of water was added to the raw-material solution thus obtained to form a coprecipitate. Thereafter, the obtained coprecipitate was filtered, washed with water, then calcinated at 500°C for 5 hours, and ground to obtain powder of a zirconia-titania solid solution powder (average particle size: 5 µm).

### <Preparation of Zirconia-Calcia Solid Solution Powder>

A Ca solution and a Zr solution were weighed to obtain the mass ratio between zirconia and calcia of 95/5 (zirconia/calcia), and dissolved in 1000 g of water thereby to obtain a raw-material solution. Subsequently, while being stirred, ammonia water obtained by diluting 456 g of 25% ammonia water with 1000 g of water was added to the raw-material solution thus obtained to form a coprecipitate. Thereafter, the obtained coprecipitate was filtered, washed with water, then calcinated at 800°C for 5 hours, and ground to obtain powder of a zirconia-calcia solid solution powder (average particle size: 2 µm).

### <Preparation of Reforming Catalyst Support>

The zirconia-titania solid solution powder, an Al₂O₃ colloid, a Zr solution and a Ce solution were mixed in the proportion (calculated as metal oxides) shown in Table 1, and then diluted with methanol to prepare a dispersion with a solid concentration of 12 mass%. Thereafter, the obtained dispersion was mixed by using the homogenizer for 2 minutes at a shear rate of 20, 000 sec⁻¹, and then gently mixed (stirring rate of 20 rpm) for about 1 minute to remove air bubbles from the resulting solution thereby to obtain a coating composition.

Subsequently, the substrate was immediately immersed in the obtained coating composition described above for 1 second to 10 seconds, and excessive coating composition was removed from the surface of the substrate by gravity and shaking after the substrate was pulled out. After being placed horizontally, the substrate was slowly dried at normal temperature for 5 minutes to 10 minutes, dried with warm air (60 to 100°C) at a wind velocity of 2 m/s to 5 m/s for 5 minutes to 10 minutes, precalcinated at 250°C for approximately 30 minutes in the air atmosphere, and further cooled for 5 minutes to 10 minutes with normal temperature air at a wind velocity of 2 m/s to 5 m/s. After such treatments were repeated twice, the substrate was calcinated for approximately 60 minutes at 500°C in the air atmosphere, and a reforming catalyst support with metal oxide coating formed on the substrate surface was obtained.

### (Comparative Example 1)

A reforming catalyst support with metal oxide coating formed on the substrate surface was obtained in the same manner as that described in Example 1 except that an Al₂O₃ colloid, a Zr solution, a Ti solution and a Ce solution were mixed in the proportion (calculated as metal oxides) shown in Table 1.

**Table 1**

| | Al₂O₃ colloid | Zirconia-titania solid solution powder | | Zr solution | Ti solution | Ce solution |
|---|---|---|---|---|---|---|
| | Al₂O₃ [mass%] | ZrO₂ [mass%] | TiO₂ [mass%] | ZrO₂ [mass%] | TiO₂ [mass%] | CeO₂ [mass%] |
| Example 1 | 15.0 | 24.3 | 10.4 | 28.4 | - | 22.0 |
| Comparative Example 1 | 15.0 | - | - | 52.7 | 10.4 | 22.0 |

### <Electron Microscopy Observation>

The surface of the metal oxide coating obtained in Example 1 was observed with an electron microscope. It was found that the zirconia-titania solid solution powder and the zirconia-calcia solid solution powder were sealed in the metal oxide matrix.

### <Tolerance-Stability Test for Sulfur Poisoning>

Tolerance to sulfur poisoning of catalysts obtained by using the reforming catalyst supports with metal oxide coatings supported on the high density metallic honeycombs with the methods described in Example 1 and Comparative Example 1, were evaluated as described below.

Specifically, each high density metallic honeycomb supporting the metal oxide coating was firstly immersed in a Rh solution for one hour, pulled out, and then the excessive solution on its surface was removed by gravity and shaking. Subsequently, after being placed horizontally, the high density metallic honeycomb was slowly dried at normal temperature for 5 minutes to 10 minutes, dried with warm air (60°C to 100°C) at a wind velocity of 2 m/s to 5 m/s for 5 minutes to 10 minutes, calcinated at 300°C for approximately 60 minutes in the air atmosphere, and further cooled for 5 minutes to 10 minutes with normal temperature air at a wind velocity of 2 m/s to 5 m/s. After such treatments were repeated three times, each high density metallic honeycomb, supporting metal oxide coating, supported 0.1 g of rhodium, and thus, catalysts for hydrogen production reaction were obtained.

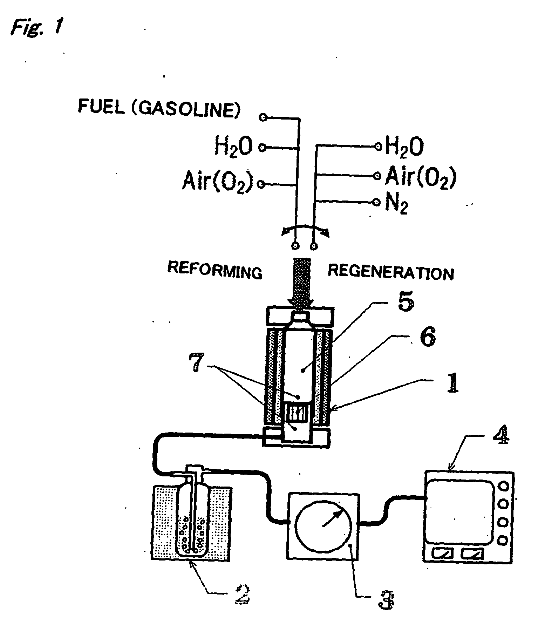

Then, each of the catalysts for hydrogen production reaction thus obtained was set in a test device shown in Fig. 1. The test device shown in Fig. 1 includes: an infra-red image furnace 1 into which a reforming gas and a regeneration gas are alternately introduced; a trapper 2 which removes water vapor in an outlet reaction gas; a flowmeter 3; and a gas chromatography 4. A catalyst for hydrogen production reaction (high density metallic honeycomb) 6 is placed in a silica-glass furnace tube 5 of the infra-red image furnace 1. The temperature of the infra-red image furnace 1 is measured by a thermocouple 7.

Next, a regeneration process and a reforming process were alternately performed in intervals of certain periods under conditions shown in Tables 2 and 3. Then, a regeneration efficiency, a flow maintaining rate, and a non-methane hydrocarbon (NMHC) concentration in the outlet reaction gas, were measured. Incidentally, the durations of the regeneration process and the reforming process per cycle were set 15 minutes and 60 minutes, respectively, and 4 cycles were evaluated in one day, and the evaluations were performed for two days. The fifth cycle and the subsequent cycles were evaluated in the experiment in the second day. Moreover, the temperature in Table 2 indicates a catalyst temperature (reforming temperature). In Table 3, S/C indicates a "steam/carbon" value, and O/S indicates an "oxide/carbon" value.

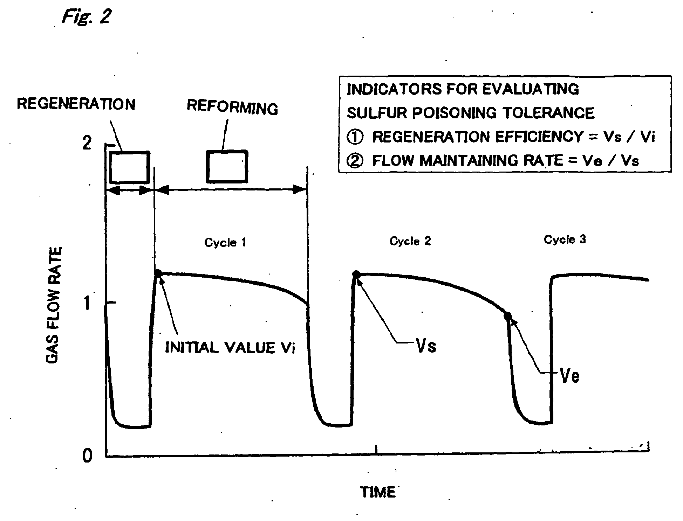

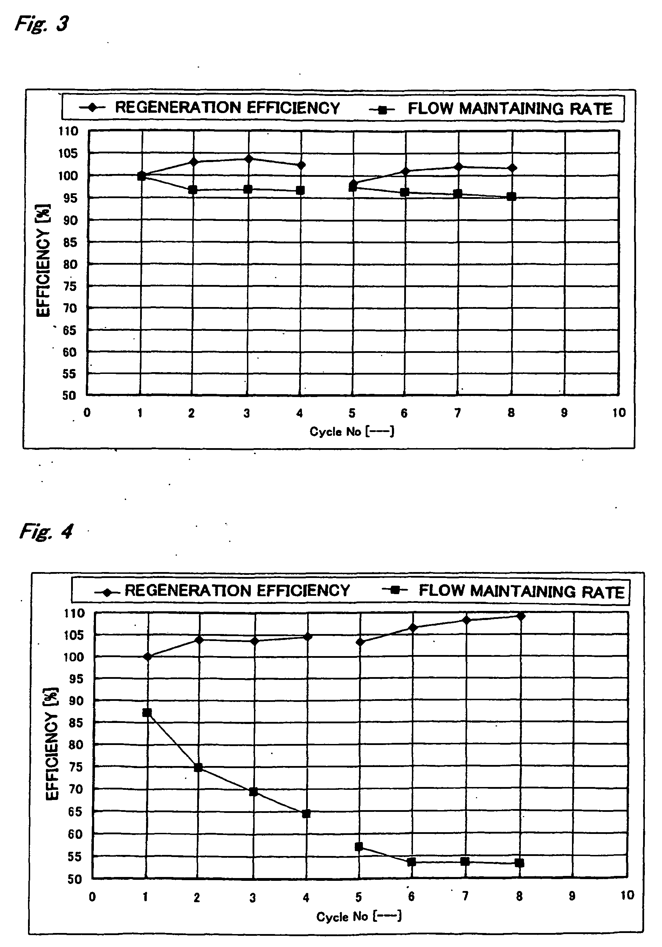

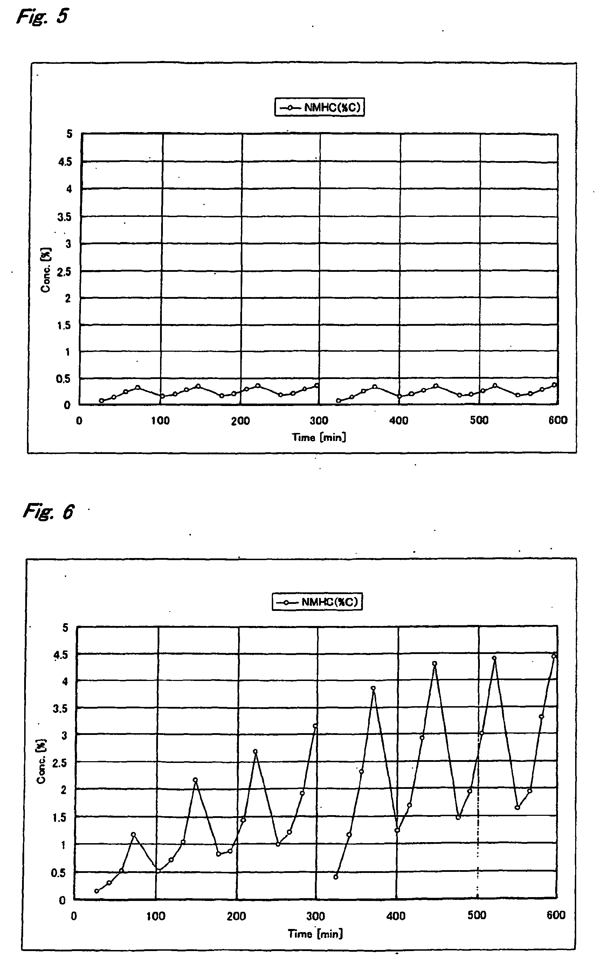

Note that the regeneration efficiency is an indicator of a degree of recovery, i.e. how much a catalyst is recovered in relation to the initial performance by the regeneration process (catalyst regeneration) after a reforming reaction (sulfur poisoning), and a "Vs/Vi" value shown in Fig. 2 was used as the measurement value. Moreover, the flow maintaining rate is an indicator of a degree of reforming performance maintained during a reforming reaction cycle, and a "Ve/Vs" value shown in Fig. 2 was used as the measurement value. Results of both the regeneration efficiency and the flow maintaining rate obtained by using the reforming catalyst supports of Example 1 and Comparative Example 1 are shown in Figs. 3 and 4, respectively. Additionally, results of the NMHC concentration in the outlet reaction gas obtained by using the reforming catalyst supports of Example 1 and Comparative Example 1 are shown in Figs. 5 and 6, respectively.

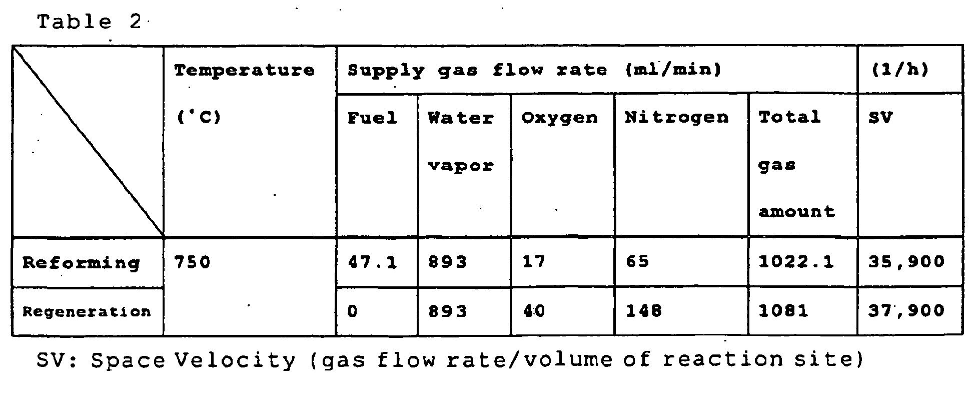

**Table 3**

| | | |
|---|---|---|
| Reforming conditions | S/C | O/C |
| | 2.6 | 0.1 |
| Regeneration conditions | Water vapor concentration | Oxygen concentration |
| | 82.6 | 3.7 |

As is apparent from the results shown in Figs. 3 to 6, the reforming catalyst support of the present invention, which was obtained by the production method of the present invention, had significantly improved tolerance of the catalyst support to sulfur poisoning at the reforming temperature. Thus, it was confirmed that the reforming performance was maintained very stably over time.

### <Evaluation of nanopores>

The presence of nanopores in the matrix part of the metal oxide coating obtained by the method described in Example 1 was confirmed by the small angle X-ray scattering method as described below. Note that, the obtained coating was removed from the substrate, and ground in a mortar, and the powdered matrix part was used as a sample.

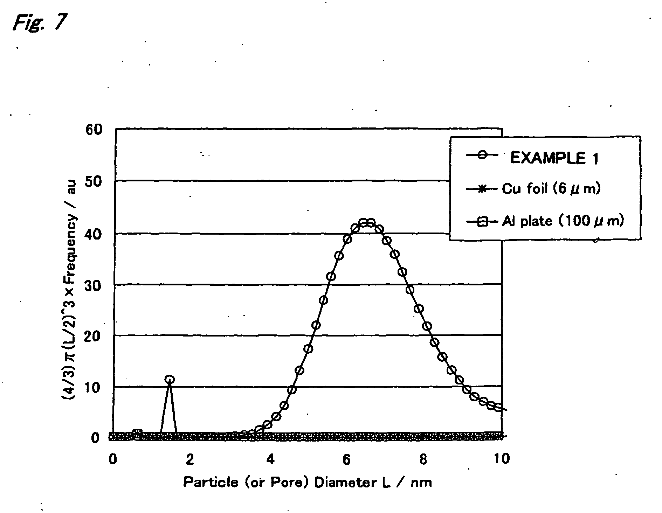

That is, X-ray undulator beam line of excellent parallelism and energy density in a synchrotron radiation facility was used for the small angle X-ray scattering method. X-ray energy was set to 10 keV (wavelength 0.124 nm) , and the X-ray beam was adjusted to approximately 0.04 mm² by use of a four-quadrant slit. The X-ray beam thus adjusted was used as an origin of the beam for the small angle X-ray scattering method. The excessive scattering light was blocked by providing a pin hole with a diameter of 0.5 mm approximately 65 cm downstream from the origin, and the sample was placed to be attached to the immediately downstream of the pin hole. The amount of absorption was calculated so that the intensity of X-ray after transmitting the sample was 1/e (e being the base of natural logarithm), and appropriate sample thickness was derived. Compact sample was prepared according to this sample thickness. An imaging plate was placed precisely 50 cm downstream from the sample (115 cm downstream from the origin), and the scattered X-ray was recorded. An attenuator with cover glasses was placed at the position of transmitting X-ray to prevent damages in the imaging plate as well as to record the position of transmitting X-ray at appropriate intensity on the imaging plate. Average value of X-ray intensity recorded on the concentric circle, which had a position of transmitting X-ray on the imaging plate as a center, was derived, and scattering angle was plotted against intensity by converting the radius of concentric circle to the angle for the analysis. An appropriate distribution for explaining the plot of scattering angle against intensity was found by appropriately changing the distribution of scatterer radius assuming a spherical scatterer in the sample. A measured result for the matrix part of the metal oxide coating obtained by the method described in Example 1 is shown in Fig. 7. Additionally, measured results for a copper foil (thickness: 6 µm) and an aluminum plate (thickness: 100 µm), which are bulk bodies, are shown in Fig. 7 for comparison.

As is apparent from the results shown in Fig. 7, the matrix in the coating of the reforming catalyst support of the present invention obtained by the production method of the present invention was confirmed to be a nanoporous metal oxide material with considerably fine nanopores, wherein the nanopores have diameters of 2 nm or less.

As described so far, the present invention makes it possible to produce a reforming catalyst support having sufficiently high tolerance of the catalyst support to sulfur poisoning at reforming temperatures, and capable of sufficiently improving reforming-performance stability over time.

Therefore, the present invention is a considerably useful technique to obtain a reforming catalyst support suitable in fuel reforming systems and the like which use hydrocarbon fuels containing a sulfur component as a source material.

## Claims

1. A catalyst support comprising:
a substrate; and
a coating formed on a surface of the substrate and comprising a matrix and powders of a zirconia-titania solid solution, said powders being dispersed in the matrix, wherein the content of zirconia in the zirconia-titania solid solution is 50 mass% to 90 mass% of the total amount of zirconia and titania, said matrix being a nanoporous metal oxide with nanopores, the nanopores having diameters of 10 nm or less, and said nanoporous metal oxide being at least one member selected from the group consisting of alumina, zirconia, iron oxides, oxides of rare earth elements, alkali metal oxides and alkali earth metal oxides.

2. The catalyst support according to claim 1,
wherein the nanopores have diameters of 2 nm or less.

3. The catalyst support according to claim 1 or 2,
wherein the average particle size of the zirconia-titania solid solution powder is 0.01 µm to 50 µm.

4. The catalyst support according to any one of claims 1 to 3,
wherein the content of the zirconia-titania solid solution powder is 10 mass% to 60 mass% of the total amount of metal oxides constituting the coating.

5. The catalyst support according to any one of claims 1 to 4,
further comprising powders of a zirconia-calcia solid solution which are dispersed in the matrix,
wherein the content of zirconia in said zirconia-calcia solid solution is 80 mass% to 98 mass% of the total amount of zirconia and calcia.

6. The catalyst support according to claim 5,
wherein the average particle size of the zirconia-calcia solid solution powders is 0.01 µm to 50 µm.

7. The catalyst support according to claim 5 or 6,
wherein the content of the zirconia-calcia solid solution powders is 10 mass% to 60 mass% of the total amount of metal oxides constituting the coating.

8. A catalyst, comprising the catalyst support according to any one of claims 1 to 7, and
a noble metal supported on the surface of the zirconia-titania solid solution powders and/or on the surface of the coating.

9. A method of producing a catalyst support comprising:
obtaining a coating composition by mixing powders of a zirconia-titania solid solution together with a fluid raw material composition containing a raw material of a metal oxide of at least one member selected from the group consisting of alumina, zirconia, iron oxides, oxides of rare earth elements, alkali metal oxides and alkali earth metal oxides, at a shear rate of 10000 sec⁻¹ or higher; and
heat-treating a substrate after applying the coating composition to a surface of the substrate to form a coating on the surface of the substrate, said coating comprising a matrix and the powders dispersed in the matrix, said matrix being a nanoporous metal oxide with nanopores, the nanopores having diameters of 10 nm or less.

10. The method according to claim 9,
wherein the shear rate is 20,000 sec⁻¹ or higher.

11. The method according to claim 9 or 10,
wherein the content of zirconia in the zirconia-titania solid solution is 50 mass% to 90 mass% of the total amount of zirconia and titania.

12. The method according to any one of claims 9 to 11,
wherein the average particle size of the zirconia-titania solid solution powder is 0.01 µm to 50 µm.

13. The method according to any one of claims 9 to 12,
wherein the content of the zirconia-titania solid solution powder is 10 mass% to 60 mass% of the total amount of metal oxides constituting the coating.

14. The method according to any one of claims 19 to 13,
wherein powders of a zirconia-calcia solid solution are mixed together with the zirconia-titania solid solution powders and the fluid raw material composition at the shear rate.

15. The method according to claim 14,
wherein the content of zirconia in the zirconia-calcia solid solution is 80 mass% to 98 mass% of the total amount of zirconia and calcia.

16. The method according to claim 14 or 15,
wherein the average particle size of the zirconia-calcia solid solution powder is 0.01 µm to 50 µm.

17. The method according to any one of claims 14 to 16,
wherein the content of the zirconia-calcia solid solution powders is 10 mass% to 60 mass% of the total amount of metal oxides constituting the coating.

18. A method of producing a catalyst, comprising the method according to any one of claims 9 to 17, and
a step of supporting a noble metal on the surface of the zirconia-titania solid solution powders and/or on the surface of the coating.

19. Use of the catalyst according to claim 8 for reforming hydrocarbon funds into hydrogen.

## Patentansprüche

1. Katalysatorträger, umfassend:
ein Substrat und
eine Beschichtung, die auf einer Oberfläche des Substrats ausgebildet ist und eine Matrix und Pulver einer festen Lösung von Zirkoniumoxid-Titanoxid umfasst, wobei die Pulver in der Matrix dispergiert sind, wobei der Gehalt von Zirkoniumoxid in der festen Lösung von Zirkoniumoxid-Titanoxid 50 Massen-% bis 90 Massen-% der Gesamtmenge von Zirkoniumoxid und Titanoxid beträgt, wobei die Matrix ein nanoporöses Metalloxid mit Nanoporen ist, wobei die Nanoporen Durchmesser von 10 nm oder weniger aufweisen, und wobei das nanoporöse Metalloxid mindestens ein Mitglied ist, das aus der Gruppe, bestehend aus Aluminiumoxid, Zirkoniumoxid, Eisenoxiden, Oxiden von Seltenerdelementen, Alkalimetalloxiden und Erdalkalimetalloxiden, ausgewählt ist.

2. Katalysatorträger nach Anspruch 1, wobei die Nanoporen Durchmesser von 2 nm oder weniger aufweisen.

3. Katalysatorträger nach Anspruch 1 oder 2, wobei die durchschnittliche Teilchengröße des Pulvers der festen Lösung von Zirkoniumoxid-Titanoxid 0,01 µm bis 50 µm beträgt.

4. Katalysatorträger nach einem der Ansprüche 1 bis 3, wobei der Gehalt des Pulvers der festen Lösung von Zirkoniumoxid-Titanoxid 10 Massen-% bis 60 Massen-% der Gesamtmenge der Metalloxide beträgt, welche die Beschichtung bilden.

5. Katalysatorträger nach einem der Ansprüche 1 bis 4, der ferner Pulver einer festen Lösung von Zirkoniumoxid-Calciumoxid umfasst, die in der Matrix dispergiert sind, wobei der Gehalt von Zirkoniumoxid in der festen Lösung von Zirkoniumoxid-Calciumoxid 80 Massen-% bis 98 Massen-% der Gesamtmenge von Zirkoniumoxid und Calciumoxid beträgt.

6. Katalysatorträger nach Anspruch 5, wobei die durchschnittliche Teilchengröße der Pulver der festen Lösung von Zirkoniumoxid-Calciumoxid 0,01 µm bis 50 µm beträgt.

7. Katalysatorträger nach Anspruch 5 oder 6, wobei der Gehalt der Pulver der festen Lösung von Zirkoniumoxid-Calciumoxid 10 Massen-% bis 60 Massen-% der Gesamtmenge der Metalloxide beträgt, welche die Beschichtung bilden.

8. Katalysator, umfassend den Katalysatorträger nach einem der Ansprüche 1 bis 7 und ein Edelmetall, das auf der Oberfläche der Pulver der festen Lösung von Zirkoniumoxid-Titanoxid und/oder auf der Oberfläche der Beschichtung geträgert ist.

9. Verfahren zur Herstellung eines Katalysatorträgers, umfassend:
Erhalten einer Beschichtungszusammensetzung durch Mischen von Pulvern einer festen Lösung von Zirkoniumoxid-Titanoxid zusammen mit einer fluiden Ausgangsmaterialzusammensetzung, die ein Ausgangsmaterial eines Metalloxids von mindestens einem Mitglied, ausgewählt aus der Gruppe, bestehend aus Aluminiumoxid, Zirkoniumoxid, Eisenoxiden, Oxiden von Seltenerdelementen, Alkalimetalloxiden und Erdalkalimetalloxiden, enthält, bei einer Schergeschwindigkeit von 10000 s⁻¹ oder höher, und
Wärmebehandeln eines Substrats nach dem Aufbringen der Beschichtungszusammensetzung auf eine Oberfläche des Substrats zur Bildung einer Beschichtung auf der Oberfläche des Substrats, wobei die Beschichtung eine Matrix und die in der Matrix dispergierten Pulver umfasst, wobei die Matrix ein nanoporöses Metalloxid mit Nanoporen ist, wobei die Nanoporen Durchmesser von 10 nm oder weniger aufweisen.

10. Verfahren nach Anspruch 9, wobei die Schergeschwindigkeit 20000 s⁻¹ oder mehr beträgt.

11. Verfahren nach Anspruch 9 oder 10, wobei der Gehalt von Zirkoniumoxid in der festen Lösung von Zirkoniumoxid-Titanoxid 50 Massen-% bis 90 Massen-% der Gesamtmenge von Zirkoniumoxid und Titanoxid beträgt.

12. Verfahren nach einem der Ansprüche 9 bis 11, wobei die durchschnittliche Teilchengröße des Pulvers der festen Lösung von Zirkoniumoxid-Titanoxid 0,01 µm bis 50 µm beträgt.

13. Verfahren nach einem der Ansprüche 9 bis 12, wobei der Gehalt des Pulvers der festen Lösung von Zirkoniumoxid-Titanoxid 10 Massen-% bis 60 Massen-% der Gesamtmenge der Metalloxide beträgt, welche die Beschichtung bilden.

14. Verfahren nach einem der Ansprüche 9 bis 13, wobei Pulver einer festen Lösung von Zirkoniumoxid-Calciumoxid mit den Pulvern der festen Lösung von Zirkoniumoxid-Titanoxid und der fluiden Ausgangsmaterialzusammensetzung bei der Schergeschwindigkeit gemischt werden.

15. Verfahren nach Anspruch 14, wobei der Gehalt von Zirkoniumoxid in der festen Lösung von Zirkoniumoxid-Calciumoxid 80 Massen-% bis 98 Massen-% der Gesamtmenge von Zirkoniumoxid und Calciumoxid beträgt.

16. Verfahren nach Anspruch 14 oder 15, wobei die durchschnittliche Teilchengröße des Pulvers der festen Lösung von Zirkoniumoxid-Calciumoxid 0,01 µm bis 50 µm beträgt.

17. Verfahren nach einem der Ansprüche 14 bis 16, wobei der Gehalt der Pulver der festen Lösung von Zirkoniumoxid-Calciumoxid 10 Massen-% bis 60 Massen-% der Gesamtmenge der Metalloxide beträgt, welche die Beschichtung bilden.

18. Verfahren zur Herstellung eines Katalysators, umfassend das Verfahren nach einem der Ansprüche 9 bis 17 und einen Schritt des Trägerns eines Edelmetalls auf der Oberfläche der Pulver der festen Lösung von Zirkoniumoxid-Titanoxid und/oder auf der Oberfläche der Beschichtung.

19. Verwendung des Katalysators nach Anspruch 8 zur Reformierung von Kohlenwasserstoffkraftstoffen oder -brennstoffen zu Wasserstoff.

## Revendications

1. Support de catalyseur comprenant :
un substrat ; et
un revêtement formé sur une surface du substrat et comprenant une matrice et des poudres d'une solution solide de zircone-dioxyde de titane, lesdites poudres étant dispersées dans la matrice, dans lequel la teneur en zircone dans la solution solide de zircone-dioxyde de titane est de 50 % en masse à 90 % en masse de la quantité totale de zircone et de dioxyde de titane, ladite matrice étant un oxyde de métal nanoporeux avec des nanopores, les nanopores ayant un diamètre de 10 nm ou moins, et ledit oxyde de métal nanoporeux étant au moins un organe choisi dans le groupe consistant en l'alumine, la zircone, les oxydes de fer, les oxydes d'éléments de terres rares, les oxydes de métal alcalin et les oxydes de métal alcalino-terreux.

2. support de catalyseur selon la revendication 1,
dans lequel les nanopores ont un diamètre de 2 nm ou moins.

3. Support de catalyseur selon la revendication 1 ou 2,
dans lequel la taille de particule moyenne de la poudre de solution solide de zircone-oxyde de titane est de 0,01 µm à 50 µm.

4. Support de catalyseur selon l'une quelconque des revendications 1 à 3,
dans lequel la teneur en poudre de solution solide de zircone-oxyde de titane est de 10 % en masse à 60 % en masse de la quantité totale d'oxydes de métal constituant le revêtement.

5. Support de catalyseur selon l'une quelconque des revendications 1 à 4,
comprenant en outre des poudres d'une solution solide de zircone-oxyde de calcium qui sont dispersées dans la matrice,
dans lequel la teneur en zircone dans ladite solution solide de zircone-oxyde de calcium est de 80 % en masse à 98 % en masse de la quantité totale de zircone et d'oxyde de calcium.

6. Support de catalyseur selon la revendication 5,
dans lequel la taille moyenne de particule des poudres de la solution solide de zircone-oxyde de calcium est de 0,01 µm à 50 µm.

7. Support de catalyseur selon la revendication 5 ou 6,
dans lequel la teneur en poudres de solution solide de zircone-oxyde de calcium est de 10 % en masse à 60 % en masse de la quantité totale d'oxydes de métal constituant le revêtement.

8. Catalyseur, comprenant le support de catalyseur selon l'une quelconque des revendications 1 à 7, et
un métal noble supporté sur la surface des poudres de la solution solide de zircone-oxyde de titane et/ou sur la surface du revêtement.

9. Procédé de production d'un support de catalyseur comprenant les étapes consistant à :
obtenir une composition de revêtement en mélangeant des poudres d'une solution solide de zircone-oxyde de titane avec une composition de matériaux bruts fluide contenant un matériau brut d'un oxyde de métal d'au moins un élément choisi dans le groupe consistant en l'alumine, la zircone, les oxydes de fer, les oxydes d'éléments de terres rares, les oxydes de métal alcalin et les oxydes de métal alcalino-terreux, à un taux de cisaillement de 10 000 sec⁻¹ ou plus ; et
traiter thermiquement un substrat après application de la composition de revêtement sur une surface du substrat afin de former un revêtement sur la surface du substrat, ledit revêtement comprenant une matrice et les poudres dispersées dans la matrice, ladite matrice étant un oxyde de métal nanoporeux avec des nanopores, les nanopores ayant un diamètre de 10 µm ou moins.

10. Procédé selon la revendication 9,
dans lequel le taux de cisaillement est de 20 000 sec⁻¹ ou plus.

11. Procédé selon la revendication 9 ou 1,
dans lequel la teneur en zircone dans la solution solide de zircone-oxyde de titane est de 50 % en masse à 90 % en masse de la quantité totale de zircone et d'oxyde de titane.

12. Procédé selon l'une quelconque des revendications 9 à 11,
dans lequel la taille moyenne de particule de la poudre de solution solide de zircone-oxyde de titane est de 0,01 µm à 50 µm.

13. Procédé selon l'une quelconque des revendications 9 à 12,
dans lequel la teneur en poudre de solution solide de zircone-oxyde de titane est de 10 % en masse à 60 % en masse de la quantité totale d'oxydes de métal constituant le revêtement.

14. Procédé selon l'une quelconque des revendications 9 à 13,
dans lequel les poudres d'une solution solide de zircone-oxyde de calcium sont mélangées avec les poudres de solution solide de zircone-oxyde de titane et la composition de matériau brut fluide au taux de cisaillement.

15. Procédé selon la revendication 14,
dans lequel la teneur en zircone dans la solution solide de zircone-oxyde de calcium est de 80 % en masse à 98 % en masse de la quantité totale de zircone et d'oxyde de calcium.

16. Procédé selon la revendication 14 ou 15,
dans lequel la taille moyenne de particule de la poudre de solution solide de zircone-oxyde de calcium est de 0,01 µm à 50 µm.

17. Procédé selon l'une quelconque des revendications 14 à 16,
dans lequel la teneur en poudres de solution solide de zircone-oxyde de calcium est de 10 % en masse à 60 % en masse de la quantité totale d'oxydes de métal constituant le revêtement.

18. Procédé de production d'un catalyseur, comprenant le procédé selon l'une quelconque des revendications 9 à 17, et
une étape consistant à supporter un métal noble sur la surface des poudres de solution solide de zircone-oxyde de titane et/ou sur la surface du revêtement.

19. Utilisation du catalyseur selon la revendication 8 pour reformer des combustibles hydrocarbonés en hydrogène.
